# EUROPEAN PATENT APPLICATION

(11) **EP 4 693 995 A1**
(43) Date of publication of application: **11.02.2026**
(21) Application number: 23931586.4
(22) Date of filing: 07.04.2023
(51) Int. Cl.: H04L 5/00, H04W 64/00, H04W 24/02

(54) **PROCESSING METHODS FOR POSITIONING REFERENCE SIGNAL CONFIGURATION, AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2023/087139
(87) International publication number: WO 2024/207526

(57) **Abstract**

Provided in the embodiments of the present disclosure are processing methods for an uplink positioning reference signal configuration. A method is executed by a user equipment (UE) and comprises: according to a preset rule, releasing or storing an uplink positioning reference signal configuration, the uplink positioning reference signal configuration being used for uplink positioning when the UE is in an RRC non-connected state. According to the preset rule, the UE releases or stores the uplink positioning reference signal configuration used in the RRC non-connected state, so as to reduce release performed when the UE does not need to release the uplink positioning reference signal configuration used in the RRC non-connected state, thereby reducing further requests for the uplink positioning reference signal configuration to a first network device due to excess release by the UE, and reducing signaling overheads.

## Description

### TECHNICAL FIELD

The present disclosure relates to the technical field of wireless communication but is not limited to the technical field of wireless communication, and in particular, to a method and apparatus for processing an uplink positioning reference signal configuration, a communication device, and a storage medium.

### BACKGROUND

New Radio (NR) is a global standard for a new air interface design based on Orthogonal Frequency Division Multiplexing (OFDM), and is also a very important foundation for the next generation of cellular mobile technology. NR has the characteristics of ultra-low latency and high reliability, and supports the positioning of user equipment (UE) in Radio Resource Control (RRC) non-connected state. The positioning of the UE may include uplink positioning and/or downlink positioning. In some cases, the uplink positioning and downlink positioning can be combined to achieve accurate positioning of the UE. During the uplink positioning process, the UE needs to send an uplink positioning reference signal for positioning the UE.

### SUMMARY

The embodiments of the present disclosure provide a method and apparatus for processing an uplink positioning reference signal configuration, a communication device, and a storage medium.

A first aspect of the embodiments of the present disclosure provides a method for processing an uplink positioning reference signal configuration, which is performed by a user equipment (UE), and the method includes:
releasing or saving an uplink positioning reference signal configuration according to a preset rule, where the uplink positioning reference signal configuration is used for uplink positioning when the UE is in an RRC non-connected state.

A second aspect of the embodiments of the present disclosure provides a method for processing an uplink positioning reference signal configuration, which is performed by a first network device of a first cell, and the method includes:
sending a radio resource control (RRC) release message, where the RRC release message is used to enable a UE to continue to use a saved uplink positioning reference signal configuration.

A third aspect of the embodiments of the present disclosure provides a method for processing an uplink positioning reference signal configuration, which is performed by a second network device of a second cell, and includes:
receiving fourth indication information sent by a first network device of a first cell; where the fourth indication information is used to indicate that a UE in an RRC connected state switched from the first cell to the second cell saves an uplink positioning reference signal configuration for an RRC non-connected state.

A fourth aspect of the embodiments of the present disclosure provides a method for processing an uplink positioning reference signal configuration, which is performed by a wireless communication system, where the wireless communication system includes a user equipment (UE), and the method includes:
the UE releasing or saving an uplink positioning reference signal configuration according to a preset rule, where the uplink positioning reference signal configuration is used for uplink positioning when the UE is in an RRC non-connected state.

A fifth aspect of the embodiments of the present disclosure provides an apparatus for processing an uplink positioning reference signal configuration, the apparatus including:
a processing module, configured to release or save an uplink positioning reference signal configuration according to a preset rule, where the uplink positioning reference signal configuration is used for uplink positioning when a UE is in an RRC non-connected state.

A sixth aspect of the embodiments of the present disclosure provides an apparatus for processing an uplink positioning reference signal configuration, the apparatus including:
a sending module, configured to send a radio resource control (RRC) release message, where the RRC release message is used to enable a UE to continue to use a saved uplink positioning reference signal configuration.

A seventh aspect of the embodiments of the present disclosure provides an apparatus for processing an uplink positioning reference signal configuration, the apparatus including:
a receiving module, configured to receive fourth indication information sent by a first network device of a first cell; where the fourth indication information is used to indicate that a UE in an RRC connected state switched from a first cell to a second cell saves an uplink positioning reference signal configuration for an RRC non-connected state.

An eighth aspect of the embodiments of the present disclosure provides a communication device, including a processor, a transceiver, a memory, and an executable program stored in the memory and capable of being run by the processor, where when running the executable program, the processor executes the method for processing an uplink positioning reference signal configuration provided in any of the above embodiments.

A ninth aspect of the embodiments of the present disclosure provides a computer storage medium storing an executable program; after the executable program is executed by a processor, the method for processing an uplink positioning reference signal configuration provided in any of the above embodiments can be implemented.

According to the technical solutions provided by the embodiments of the present disclosure, the UE may release or save the uplink positioning reference signal configuration used in the RRC non-connected state according to the preset rule. In this way, the release of the uplink positioning reference signal configuration used in the RRC non-connected state can be reduced when the UE needs not to release it, thereby reducing the request for the uplink positioning reference signal configuration to the first network device again due to redundant release of the UE, thereby reducing signaling overhead.

For the technical solutions provided by the embodiments of the present disclosure, it should be understood that the above general description and the following detailed description are merely exemplary and explanatory and cannot limit the embodiments of the present disclosure.

### BRIEF DESCRIPTION OF THE DRAWINGS

The accompanying drawings herein are incorporated in and constitute a part of the specification, illustrate embodiments consistent with the present disclosure, and together with the specification, serve to explain the principles of the embodiments of the present disclosure.
FIG. 1 is a schematic structural diagram of a wireless communication system according to an exemplary embodiment;
FIG. 2 is a schematic diagram of a method for processing an uplink positioning reference signal configuration according to an exemplary embodiment;
FIG. 3 is a schematic diagram of another method for processing an uplink positioning reference signal configuration according to an exemplary embodiment;
FIG. 4 is a schematic diagram of another method for processing an uplink positioning reference signal configuration according to an exemplary embodiment;
FIG. 5 is a schematic diagram of another method for processing an uplink positioning reference signal configuration according to an exemplary embodiment;
FIG. 6 is a schematic diagram of another method for processing an uplink positioning reference signal configuration according to an exemplary embodiment;
FIG. 7 is a schematic diagram of another method for processing an uplink positioning reference signal configuration according to an exemplary embodiment;
FIG. 8 is a schematic diagram of another method for processing an uplink positioning reference signal configuration according to an exemplary embodiment;
FIG. 9 is a schematic diagram of another method for processing an uplink positioning reference signal configuration according to an exemplary embodiment;
FIG. 10 is a schematic diagram of another method for processing an uplink positioning reference signal configuration according to an exemplary embodiment;
FIG. 11 is a schematic diagram of another method for processing an uplink positioning reference signal configuration according to an exemplary embodiment;
FIG. 12 is a schematic diagram of another method for processing an uplink positioning reference signal configuration according to an exemplary embodiment;
FIG. 13 is a schematic diagram of another method for processing an uplink positioning reference signal configuration according to an exemplary embodiment;
FIG. 14 is a schematic diagram of another method for processing an uplink positioning reference signal configuration according to an exemplary embodiment;
FIG. 15 is a schematic diagram of a method for processing an uplink positioning reference signal configuration according to an exemplary embodiment;
FIG. 16 is a schematic diagram of a method for processing an uplink positioning reference signal configuration according to an exemplary embodiment;
FIG. 17 is a schematic diagram of another method for processing an uplink positioning reference signal configuration according to an exemplary embodiment;
FIG. 18 is a schematic diagram of another method for processing an uplink positioning reference signal configuration according to an exemplary embodiment;
FIG. 19 is a schematic diagram of another method for processing an uplink positioning reference signal configuration according to an exemplary embodiment;
FIG. 20 is a schematic diagram of another method for processing an uplink positioning reference signal configuration according to an exemplary embodiment;
FIG. 21 is a schematic diagram of another method for processing an uplink positioning reference signal configuration according to an exemplary embodiment;
FIG. 22 is a schematic diagram of an apparatus for processing an uplink positioning reference signal configuration according to an exemplary embodiment;
FIG. 23 is a schematic diagram of another apparatus for processing an uplink positioning reference signal configuration according to an exemplary embodiment;
FIG. 24 is a schematic structural diagram of a UE according to an exemplary embodiment;
FIG. 25 is a schematic structural diagram of an access device according to an exemplary embodiment.

### DETAILED DESCRIPTION

Exemplary embodiments will be described in detail herein, examples of which are shown in the accompanying drawings. When the following description refers to the drawings, unless otherwise indicated, the same numbers in different drawings represent the same or similar elements. The implementations described in the following exemplary embodiments do not represent all implementations consistent with the embodiments of the present disclosure. Instead, they are merely examples of apparatuses and methods consistent with some aspects of the embodiments of the present disclosure.

The terms used in the embodiments of the present disclosure are only for the purpose of describing specific embodiments, and are not intended to limit the embodiments of the present disclosure. The singular forms of "a/an", "said", and "the" used in the present disclosure are also intended to include plural forms, unless the context clearly indicates other meanings. It should also be understood that the term "and/or" used in the present disclosure refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining".

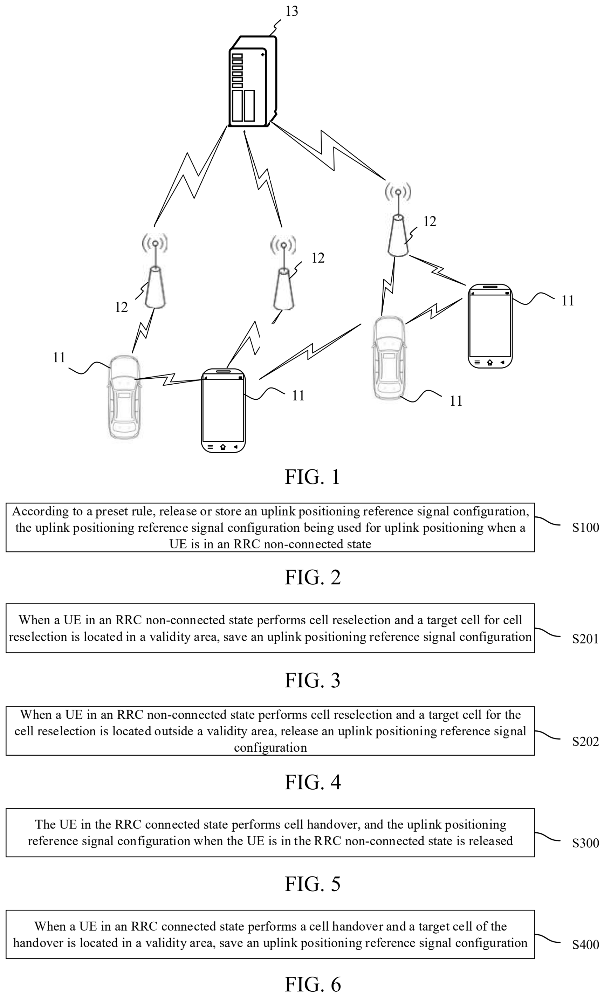

FIG. 1 is referred to, which shows a schematic structural diagram of a wireless communication system provided by an embodiment of the present disclosure. As shown in FIG. 1, the wireless communication system is a communication system based on cellular mobile communication technology, and the wireless communication system may include: at least one UE 11 and several core network devices.

UE 11 may be a device that provides voice and/or data connectivity to a user. UE 11 may communicate with one or more core networks via a radio access network (RAN). UE 11 may be an Internet of Things UE, such as a sensor device, a mobile phone (or called a cellular phone), and a computer with an Internet of Things UE, for example, a fixed, portable, pocket-sized, handheld, computer-built-in, or vehicle-mounted apparatus. For example, it may be a station (STA), a subscriber unit, a subscriber station, a mobile station, a mobile, a remote station, an access point, a remote terminal, an access terminal, a user terminal, a user agent, a user device, or a user UE (user equipment, UE). Alternatively, UE 11 may also be a device of an unmanned aerial vehicle (UAV). Alternatively, UE 11 may be an onboard device, for example, a driving computer with a wireless communication function, or a wireless communication device external to the driving computer. Alternatively, UE 11 may be a roadside device, for example, a street lamp, a signal lamp, or other roadside device with a wireless communication function.

The access device 12 may be a network device in a wireless communication system. The wireless communication system may be the 4th generation mobile communication (4G) system, also known as a long term evolution (LTE) system; or, the wireless communication system may be a 5G system, also known as a new radio (NR) system or a 5G NR system. Alternatively, the wireless communication system may be a next generation system of the 5G system. The access network in the 5G system may be called New Generation-Radio Access Network (NG-RAN). Alternatively, it may be an MTC system.

The access device 12 may be an evolved access device (eNB) adopted in the 4G system. Alternatively, the access device 12 may also be an access device (gNB) adopting a centralized distributed architecture in the 5G system. Alternatively, it may be devices such as a transmission and reception point (TRP), or network devices in a subsequent evolved communication system. When the access device 12 adopts the centralized distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer; the distributed unit is provided with a physical (PHY) layer protocol stack. The specific implementation method of the access device 12 is not limited in the embodiments of the present disclosure.

A wireless connection can be established between the access device 12 and the UE 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In one embodiment, when the UE obtains the uplink reference positioning signal configuration, it may release the uplink reference positioning signal configuration when the cell is reselected or the UE restores the RRC connection with the first network device. However, in this case, the UE may reselect a cell where the uplink reference positioning signal configuration is still valid or the UE itself has not moved, that is, when the UE releases the uplink reference positioning signal configuration, the uplink reference positioning signal configuration is still valid. Therefore, the release of the uplink reference positioning signal configuration based on the event of cell reselection, or the release of the uplink reference positioning signal configuration based on the event of the UE restoring the RRC connection with the first network device, is an unnecessary release.

After the uplink reference positioning signal configuration is unnecessarily released by the UE, the UE may request the uplink reference positioning signal configuration from the first network device again, thereby causing a re-request for the uplink reference positioning signal configuration introduced by the unnecessary release.

Referring to FIG. 2, a schematic diagram of a method for processing an uplink positioning reference signal configuration is shown. The method may be performed by a UE. The method includes the following step.

In S100: an uplink positioning reference signal configuration is released or saved according to a preset rule, where the uplink positioning reference signal configuration is used for uplink positioning when the UE is in an RRC non-connected state.

Exemplarily, the user equipment (UE) may be any communication device shown in FIG. 1, specifically, it may be a mobile phone, a tablet computer, a wearable device, a vehicle-mounted device, a smart home device, a smart office device and/or a flight device.

Before executing S100, the method further includes:
receiving the uplink positioning reference signal configuration sent by a first network device.

Exemplarily, receiving the uplink positioning reference signal configuration sent by the first network device includes:
the UE receiving an RRC message instructing the UE to enter an RRC non-connected state from an RRC connected state, where the RRC message includes: the uplink positioning reference signal configuration.

Exemplarily, the UE receives an RRC release message, which instructs the UE to enter the RRC non-connected state from the RRC connected state. The RRC non-connected state includes an RRC idle state and/or an RRC inactive state.

The uplink positioning reference signal configuration may include at least one of the following:
a resource configuration of an uplink positioning reference signal, at least indicating a sending time and frequency domain resource for the UE to send the uplink positioning reference signal;
a measurement reporting configuration of the uplink positioning reference signal, at least indicating a sending time and frequency domain resource for the terminal to report a measurement result;
a timing configuration, used to indicate an effective duration of the uplink positioning reference signal configuration, where the timing configuration may include but is not limited to: a value of a time alignment timer (TAT);
an area configuration, indicating a validity area included in the uplink positioning reference signal configuration.

Exemplarily, the preset rule may be any predefined rule. The preset rule may be agreed upon by a protocol, or indicated by uplink positioning reference signal configuration information. For example, the uplink positioning reference signal configuration may also include a release rule configuration of the uplink positioning reference signal.

In some embodiments, releasing or saving the uplink positioning reference signal configuration according to a preset rule may include:
when a release event that satisfies the release rule configuration is detected, releasing the uplink positioning reference signal configuration; otherwise, continuing to save the uplink positioning reference signal configuration.

Also exemplarily, releasing or saving the uplink positioning reference signal configuration according to a preset rule may include:
continuing to save the uplink positioning reference signal configuration during cell reselection;
   and/or,
not releasing the uplink positioning reference signal configuration during cell reselection;
   and/or,
when the UE resumes the RRC connection with the current serving cell, continuing to save the uplink positioning reference signal configuration;
   and/or,
when the UE resumes the RRC connection with the current serving cell, not releasing the uplink positioning reference signal configuration;
   and/or,
when the current position of the UE is within the validity area of the uplink positioning reference signal configuration, continuing to save the uplink positioning reference signal configuration;
   and/or,
when the current position of the UE is within the validity area of the uplink positioning reference signal configuration, not releasing the uplink positioning reference signal configuration;
   and/or,
when the UE moves out of the validity area of the uplink positioning reference signal configuration, releasing the uplink positioning reference signal configuration.

After the UR enters the non-connected state from the connected state, it may enter the connected state from the non-connected state again subsequently. If the UE saves or does not release the previously received uplink positioning reference signal configuration, the saved uplink positioning reference signal configuration can continue to be used, reducing the request for the uplink positioning reference signal configuration sent by the UE to the first network device, thereby reducing signaling overhead.

That is, in the embodiments of the present disclosure, the UE may release or save the uplink positioning reference signal configuration used in the RRC non-connected state according to the preset rule. In this way, the release of the uplink positioning reference signal configuration used in the RRC non-connected state can be reduced when the UE does not need to release the uplink positioning reference signal configuration, thereby reducing the request for the uplink positioning reference signal configuration to the first network device again due to redundant release of the UE, thereby reducing signaling overhead.

In one embodiment, the uplink positioning reference signal configuration for the UE in the RRC non-connected state includes a validity area.

Within the validity area, the uplink positioning reference signal configuration is valid, and outside the validity area, the uplink positioning reference signal configuration is invalid.

Exemplarily, the validity area may include one or more cells.

The area configuration indicating the validity area may include:
an area identifier, where different areas have different area identifiers; the area identifier may include identifications of geographical areas such as a tracking area identifier and/or a wireless access notification area identifier;
a cell identifier indicating a cell(s) included in the validity area. The cell identifier may be carried by a cell list.

In one embodiment, the validity area of the uplink positioning reference signal configuration may be one connected continuous area.

In one embodiment, if the validity area includes a plurality of cells, the plurality of cells are distributed continuously or adjacently.

Exemplarily, the validity area may be an area in a validity area list, and the validity area list may be represented as a Physical Cell Identifier (PCI) list, for example, the PCI list may include: PCI1, PCI2 and/or PCI 3.

In one embodiment, referring to FIG. 3, which is a schematic diagram of another method for processing an uplink positioning reference signal configuration, the method is performed by a UE, and the method includes the following step.

In S201: when a UE in an RRC non-connected state performs cell reselection and a target cell for cell reselection is located in a validity area, an uplink positioning reference signal configuration is saved.

Exemplarily, saving may be continuing to save.

Exemplarily, when the UE in the RRC non-connected state performs cell reselection and the target cell for cell reselection is located in the validity area, saving an uplink positioning reference signal configuration may include:
when a UE in an RRC idle state performs cell reselection and the target cell for cell reselection is located in the validity area, saving the uplink positioning reference signal configuration;
   and/or,
when a UE in an RRC inactive state performs cell reselection and the target cell for cell reselection is located in the validity area, saving the uplink positioning reference signal configuration.

Since the target cell after cell reselection is located in the validity area, the UE continues to save the uplink positioning reference signal configuration. After cell reselection or after the UE enters the RRC non-connected state again from the RRC connected state, the UE can continue to use the saved uplink positioning reference signal configuration to send the uplink positioning reference signal. In this way, the UE does not need to request the uplink positioning reference signal configuration from the first network device again, and the first network device does not need to resend the uplink positioning reference signal configuration to the UE again.

Exemplarily, when a UE in an RRC non-connected state performs cell reselection and the PCI of the target cell for cell reselection is included in the physical cell identity list, the uplink positioning reference signal configuration is saved.

In one embodiment, the method includes:
when the UE in the RRC non-connected state performs cell reselection and the target cell for the cell reselection is located in the validity area, not releasing the uplink positioning reference signal configuration.

The term "not releasing" here may mean "saving".

After receiving the uplink positioning reference signal configuration sent by the first network device, the UE saves the uplink positioning reference signal configuration, and when the UE in the RRC non-connected state performs cell reselection and the target cell for the cell reselection is located in the validity area, the uplink positioning reference signal configuration is not released, and the uplink positioning reference signal configuration is continued to be saved. In this way, after the cell reselection or after the UE enters the RRC non-connected state again from the RRC connected state, the UE can continue to use the saved uplink positioning reference signal configuration to send the uplink positioning reference signal.

In one embodiment, referring to FIG. 4, a schematic diagram of another method for processing an uplink positioning reference signal configuration is shown. The method is performed by a UE, and the method includes the following step.

In S202: when a UE in an RRC non-connected state performs cell reselection and a target cell for the cell reselection is located outside a validity area, an uplink positioning reference signal configuration is released.

The release here may include deletion.

Since the target cell after cell reselection is located outside the validity area, the UE cannot continue to send the uplink positioning reference signal according to the uplink positioning reference signal configuration in the target cell. By releasing the uplink positioning reference signal configuration, the UE can receive the uplink positioning reference signal configuration resent by the first network device, and can send the uplink positioning reference signal according to the reconfigured uplink positioning reference signal configuration.

Exemplarily, the validity area is indicated by a physical cell identifier (PCI) in a PCI list.

When a UE in an RRC non-connected state performs cell reselection and the PCI of the target cell for cell reselection is not included in the physical cell identifier list, the uplink positioning reference signal configuration is released. In one embodiment, referring to FIG. 5, a schematic diagram of another method for processing an uplink positioning reference signal configuration is shown, the method is performed by the UE, and the method includes the following step.

In S300: the UE in the RRC connected state performs cell handover, and the uplink positioning reference signal configuration when the UE is in the RRC non-connected state is released.

In this case, the cell handover of the UE in the RRC connected state may be directly based on the UE cell handover event, and the uplink positioning reference signal configuration when the UE is in the RRC non-connected state is released. At this time, if the uplink positioning reference signal configuration has a validity area, it does not matter whether the target cell of the cell handover is located in the validity area.

It is understandable that the serving cell of the UE has changed due to the movement of the UE. In this case, in order to simplify the processing of the first network device, the UE may release the uplink positioning reference signal configuration. If the UE needs to use the uplink positioning reference signal configuration again, it may request it again from the cell after handover, or the location management function (LMF) triggers the base station to provide the UE with the uplink positioning reference signal configuration.

In one embodiment, referring to FIG. 6, a schematic diagram of another method for processing an uplink positioning reference signal configuration is shown. The method is performed by a UE, and the method includes the following step.

In S400: when a UE in an RRC connected state performs a cell handover and a target cell of the handover is located in a validity area, an uplink positioning reference signal configuration is saved.

After the UE in the RRC connected state performs cell handover, if the target cell is located in the validity area, the uplink positioning reference signal configuration is still valid in the target cell, and the UE can send the uplink positioning reference signal according to the saved uplink positioning reference signal configuration after entering the non-connected state again from the connected state.

In this way, the number of requests for uplink positioning reference signal configuration sent by the UE to the first network device can be reduced, and the process of the first network device resending the uplink positioning reference signal configuration to the UE can be reduced, thereby reducing signaling overhead.

In this case, for the UE in the RRC connected state, in order to increase the application scope of the uplink positioning reference signal configuration, when the UE switches, the UE may determine whether to release its saved uplink positioning reference signal configuration according to whether the target cell it switches to is located in the validity area.

In one embodiment, the method further includes:
when the UE in the RRC connected state performs cell handover and the target cell of the handover is located in the validity area, not releasing the uplink positioning reference signal configuration.

After receiving the uplink positioning reference signal configuration sent by the first network device, the UE saves the uplink positioning reference signal configuration, and when the UE in the RRC connected state performs a cell handover and the target cell of the handover is located in the validity area, the uplink positioning reference signal configuration is not released, and the uplink positioning reference signal configuration is continued to be saved. This facilitates the UE to continue to use the saved uplink positioning reference signal configuration to send an uplink positioning reference signal after cell reselection or after the UE enters the RRC non-connected state again from the RRC connected state.

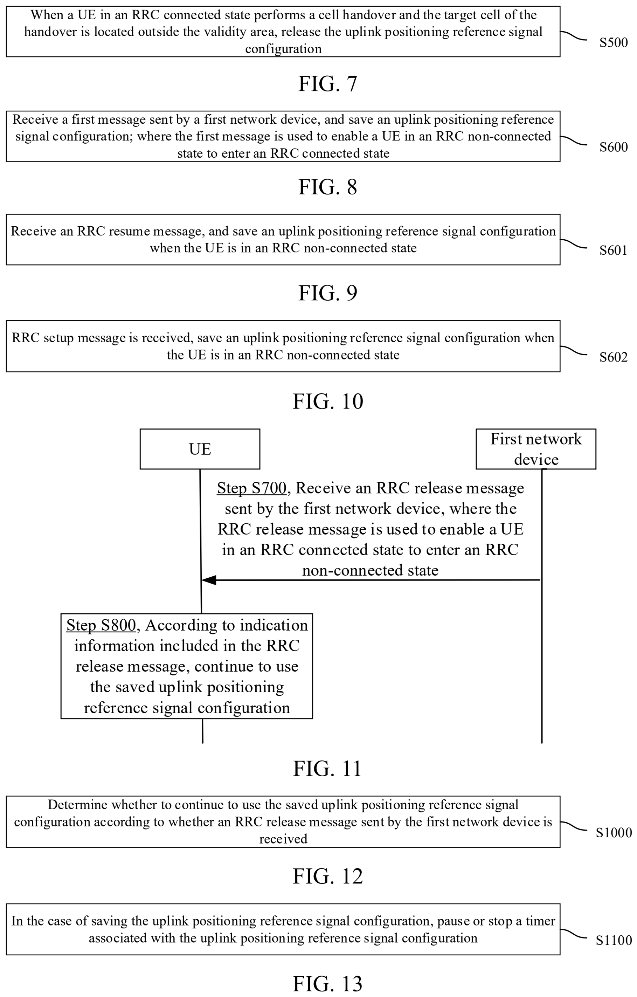

In one embodiment, referring to FIG. 7, a schematic diagram of another method for processing an uplink positioning reference signal configuration is shown. The method is performed by a UE, and the method includes the following step.

In S500: when a UE in an RRC connected state performs a cell handover and the target cell of the handover is located outside the validity area, the uplink positioning reference signal configuration is released.

When the UE in the RRC connected state performs cell handover and the target cell after handover is located outside the validity area, in order to ensure that the UE can obtain the valid uplink positioning reference signal configuration in the target cell, the UE releases the uplink positioning reference signal configuration when the UE is in the RRC non-connected state, so that the UE can obtain the valid uplink positioning reference signal configuration in the target cell again.

In one embodiment, the first network device configures the UE with an uplink positioning reference signal (Sounding Reference Signal, SRS) configuration in a radio resource control (RRC) inactive state, and the UE may release the SRS configuration in the following cases:
the RRC layer of the UE receives a release request from the Medium Access Control (MAC) layer of the terminal, requesting the RRC layer to release the uplink positioning reference configuration;
the RRC layer of the UE receives a radio resource control resume message (RRC resume message) sent by the first network device, which is used to instruct the UE in the RRC inactive state to enter the RRC connected state;
the RRC layer of the UE receives a radio resource control setup message (RRC setup message) sent by the first network device, which is used to instruct the UE in the RRC connected state to enter the RRC connected state.

Exemplarily, the UE may include: an RRC layer, which is used to control the RRC connection between the terminal and the first network device; and a MAC layer, which is the bottom layer of the RRC layer, and may monitor a locator corresponding to the uplink positioning reference signal configuration. In some cases, if the timer times out, the MAC layer may send a release request to the RRC layer.

The timer may be a time alignment timer for the uplink positioning reference signal configuration. The timer may be used to time the effective duration of the uplink positioning reference signal configuration. The time alignment timer may be associated with the uplink positioning reference signal configuration and the timing advance (TA) at the same time.

When the time alignment timer runs, the uplink positioning reference signal configuration and the current value of TA are valid. When the time alignment timer times out, the uplink positioning reference signal configuration and the current value of TA are invalid.

When one timing reference signal configuration is invalid, the UE cannot continue to send an uplink positioning reference signal according to the uplink positioning reference signal configuration.

In some embodiments, the method includes:
the UE sending an uplink positioning reference signal in an RRC non-connected state according to the uplink positioning reference signal configuration;
   and/or,
the UE in the RRC connected state stopping sending the uplink positioning reference signal according to the uplink positioning reference signal configuration.

In one embodiment, referring to FIG. 8, a schematic diagram of another method for processing an uplink positioning reference signal configuration is shown. The method is performed by a UE, and the method includes the following step.

In S600: a first message sent by a first network device is received, and an uplink positioning reference signal configuration is saved; where the first message is used to enable a UE in an RRC non-connected state to enter an RRC connected state.

After the UE enters the RRC connected state from the RRC non-connected state, the uplink positioning reference signal configuration when the UE is in the RRC non-connected state is continued to be saved. In this way, when the UE enters the RRC non-connected state again, the uplink positioning reference signal can be sent based on the saved uplink positioning reference signal without requesting the uplink positioning reference signal configuration again.

Exemplarily, the first message sent by the first network device to enable the UE in the RRC non-connected state to enter the RRC connected state is received, and the uplink positioning reference signal configuration is saved.

In one embodiment, the first message that enables the UE in the RRC non-connected state to enter the RRC connected state is a message for the UE in the non-connected state to enter the connected state.

Exemplarily, the first message that enables the UE in the RRC non-connected state to enter the RRC connected state may include:
an RRC resume message;
   and/or,
an RRC setup message.

In one embodiment, the method further includes:
upon receiving a first message sent by a first network device, not releasing the uplink positioning reference signal configuration.

After the UE enters the RRC connected state from the RRC non-connected state, the uplink positioning reference signal configuration is not released. In this way, when the UE enters the RRC non-connected state again, the uplink positioning reference signal can be sent based on the saved uplink positioning reference signal without requesting the uplink positioning reference signal configuration again.

Referring to FIG. 9, an embodiment of the present disclosure provides a schematic diagram of a method for processing an uplink positioning reference signal configuration. The method is performed by a UE, and the method includes the following step.

In S601: an RRC resume message is received, and an uplink positioning reference signal configuration when the UE is in an RRC non-connected state is saved.

The RRC resume message can enable the UE to enter the RRC connection state from the RRC inactive state, and the UE establishes a connection with the first network device according to the RRC resume message. In this case, the UE saves the uplink positioning reference signal configuration used in the RRC non-connected state, so that after the UE enters the RRC non-connected state again, the uplink positioning reference signal is sent according to the saved uplink positioning reference signal configuration in the RRC non-connected state to achieve positioning of the UE.

In one embodiment, referring to FIG. 10, a schematic diagram of another method for processing an uplink positioning reference signal configuration is shown. The method is performed by a UE, and the method includes the following step.

In S602: an RRC setup message is received, and an uplink positioning reference signal configuration when the UE is in an RRC non-connected state is saved.

The RRC setup message can enable the UE to enter the RRC connected state from the idle state. In this case, the UE saves the uplink positioning reference signal configuration when the UE is in the RRC non-connected state. This makes it easier for the UE to send an uplink positioning reference signal according to the saved uplink positioning reference signal configuration after entering the RRC non-connected state again from the RRC connected state, so as to realize the positioning of the UE. Unnecessary release can be reduced, thereby reducing the request for the uplink positioning reference signal configuration sent by the UE to the first network device, and thus signaling overhead is saved.

In one embodiment, referring to FIG. 11, a schematic diagram of another method for processing an uplink positioning reference signal configuration is shown. The method is performed by a UE, and the method further includes the following steps.

In S700: an RRC release message sent by the first network device is received, where the RRC release message is used to enable a UE in an RRC connected state to enter an RRC non-connected state.

In S800: according to indication information included in the RRC release message, the saved uplink positioning reference signal configuration is continued to be used.

After receiving the RRC release message, the UE can enter the RRC non-connected state from the RRC connected state according to the RRC release message, and the UE disconnects the RRC connection with the first network device. At the same time, the UE can determine whether to continue to use the saved uplink positioning reference signal configuration according to the indication information contained in the RRC release message. The UE determines to continue to use the saved uplink positioning reference signal configuration according to the indication information contained in the RRC release message. If the indication information contained in the RRC release message indicates that the UE continues to use the saved uplink positioning reference signal configuration, the UE sends an uplink positioning reference signal according to the saved uplink positioning reference signal configuration.

Exemplarily, the indication information included in the RRC release message may instruct the UE to continue to use the saved uplink positioning reference signal configuration.

Exemplarily, the indication information included in the RRC release message includes first indication information; or, the indication information included in the RRC release message includes indication information such as second indication information and third indication information.

Exemplarily, the indication information included in the RRC release message may be carried (or borne) by a preset field, that is, the indication information of the RRC release message includes a preset field, and the information content carried by the preset field is the information content indicating whether the UE continues to use the saved uplink positioning reference signal configuration.

In one embodiment, referring to FIG. 12, which is a schematic diagram of another method for processing an uplink positioning reference signal configuration, the method is performed by a UE, and after saving the uplink positioning reference signal configuration, the method further includes the following step.

In S1000: whether to continue to use the saved uplink positioning reference signal configuration is determined according to whether an RRC release message sent by the first network device is received.

In this embodiment, the UE determines whether to continue to use the saved uplink positioning reference signal configuration according to a protocol agreement and a reception result of whether the RRC release message sent by the first network device is received. In response to receiving the RRC release message, the saved uplink positioning reference signal configuration is continued to be used. In response to not receiving the RRC release message, the saved uplink positioning reference signal configuration is not continued to be used.

Exemplarily, in response to not receiving the RRC release message, the saved uplink positioning reference signal configuration is released.

In one embodiment, referring to FIG. 13, which is a schematic diagram of another method for processing an uplink positioning reference signal configuration, the method is performed by a UE, and the method further includes the following step.

In S1100: in the case of saving the uplink positioning reference signal configuration, a timer associated with the uplink positioning reference signal configuration is paused or stopped.

Exemplarily, in the case of saving the uplink positioning reference signal configuration, pausing or stopping the timer associated with the uplink positioning reference signal configuration may include:
in the case that the UE enters the RRC connected state and saves the uplink positioning reference signal configuration, pausing or stopping the timer associated with the uplink positioning reference signal configuration.

In one embodiment, the method for processing an uplink positioning reference signal configuration further includes:
in the case that the UE in the RRC non-connected state performs cell reselection and the target cell of the cell reselection is located in the validity area, and the uplink positioning reference signal configuration is saved or not released, pausing or stopping the timer associated with the uplink positioning reference signal configuration;
   or,
in the case that the UE in the RRC connected state performs cell handover and the target cell of the handover is located in the validity area, and the uplink positioning reference signal configuration is saved or not released, pausing or stopping the timer associated with the uplink positioning reference signal configuration;
   or,
in the case of entering the RRC connected state from the RRC non-connected state according to the first message sent by the first network device, and saving or not releasing the uplink positioning reference signal configuration, pausing or stopping the timer associated with the uplink positioning reference signal configuration; where the first message is used to instruct the UE in the RRC non-connected state to enter the RRC connected state.

Pausing or stopping the timer associated with the uplink positioning reference signal configuration can reduce unnecessary release of the uplink positioning reference signal configuration, thereby reducing the UE sending uplink positioning reference signal configuration request to the first network device, which saves signaling overhead.

Exemplarily, in the case that the UE receives the RRC resume message and saves or does not release the uplink positioning reference signal configuration, the timer associated with the uplink positioning reference signal configuration is paused or stopped.

Exemplarily, in the case that the UE receives the RRC setup message and saves or does not release the uplink positioning reference signal configuration, the timer associated with the uplink positioning reference signal configuration is paused or stopped.

In one embodiment, since the release of the uplink positioning reference signal configuration is related to the timer of the MAC layer, after the UE receives the RRC resume message or the RRC setup message and the UE determines to save the uplink positioning reference signal configuration, the RRC layer of the UE instructs the MAC layer to pause or stop the timer associated with the uplink positioning reference signal configuration.

After receiving the RRC setup message or the RRC resume message, the UE pauses or stops the timer associated with the uplink positioning reference signal configuration, which can reduce unnecessary release of the uplink positioning reference signal configuration, thereby reducing the UE's request for uplink positioning reference signal configuration to the first network device and saving signaling overhead.

The timer associated with the uplink positioning reference signal configuration may include: a time alignment timer of the uplink positioning reference signal configuration.

The time alignment timer may be used to time the effective duration of the uplink positioning reference signal configuration.

The time alignment timer can simultaneously associate with the uplink positioning reference signal configuration and the timing advance (TA).

When the time alignment timer runs, the uplink positioning reference signal configuration and the current value of TA are valid. When the time alignment timer times out, the uplink positioning reference signal configuration and the current value of TA are invalid.

When one timing reference signal configuration is invalid, the UE cannot continue to send an uplink positioning reference signal according to the uplink positioning reference signal configuration.

In some embodiments, the timer may be a timer maintained and supervised by the MAC layer of the terminal, which may also be referred to as a MAC timer.

In some embodiments, the timer may also be used to share a timer for the timing advance (TA). If the TA change of the UE causes the timer to time out, the timer expires, and the MAC layer of the UE may send a release request to the RRC layer of the UE.

Pausing the timer may include: stopping timing of the timer and maintaining the current timing value.

Stopping the timer may include: stopping the timer from timing and setting the timing value of the timer to an initial value.

Also exemplarily, the method may include:
in the case that the UE enters the RRC connected state and releases the uplink positioning reference signal configuration, releasing the timer associated with the uplink positioning reference signal configuration.

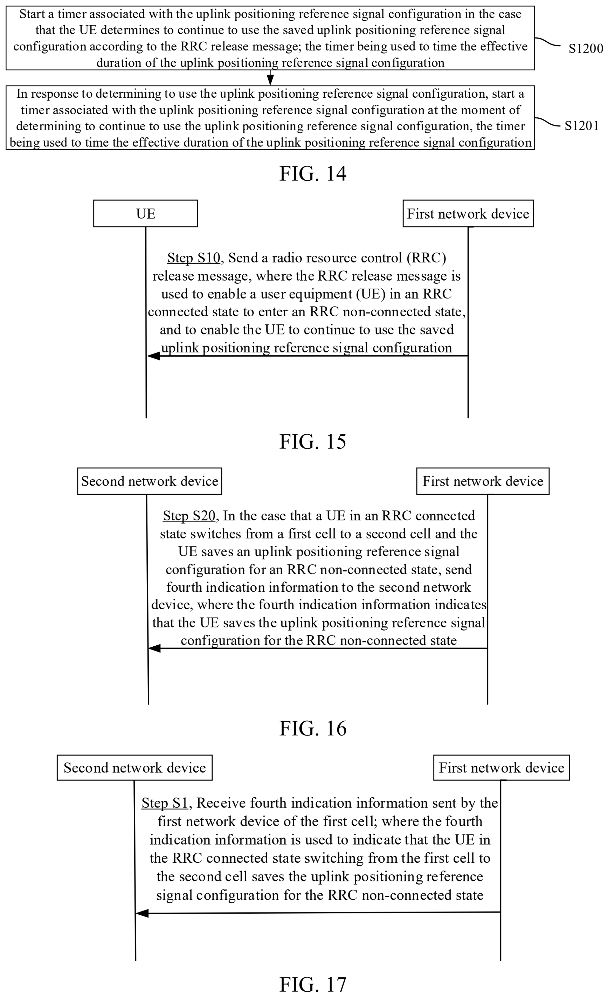

In one embodiment, referring to FIG. 14, which is a schematic diagram of another method for processing an uplink positioning reference signal configuration, the method is performed by a UE, and after saving the uplink positioning reference signal configuration according to a preset rule, the method further includes the following steps.

In S1200: whether to continue to use the uplink positioning reference signal configuration is determined according to the received RRC release message sent by the first network device.

In S1201, in response to determining to use the uplink positioning reference signal configuration, a timer associated with the uplink positioning reference signal configuration is started at the moment of determining to continue to use the uplink positioning reference signal configuration; where the timer is used to time the effective duration of the uplink positioning reference signal configuration.

Exemplarily, in the case of continuing to use the saved uplink positioning reference signal configuration, at the moment when the UE determines to continue to use the uplink positioning reference signal configuration, starting a timer associated with the uplink positioning reference signal configuration may include:
in the case that the UE returns to the RRC non-connected state and continues to use the saved uplink positioning reference signal configuration, starting a timer associated with the uplink positioning reference signal configuration at the moment when it is determined to continue to use the uplink positioning reference signal configuration.

When the UE determines to continue to use the saved uplink positioning reference signal configuration, and at the moment of determining to continue to use the uplink positioning reference signal configuration, the UE can start the timer associated with the uplink positioning reference signal configuration to time the uplink positioning reference signal configuration used this time, thereby reducing the situation where the configuration resources continue to be occupied when the timer expires and the UE no longer continues to use the saved uplink positioning reference signal configuration, thereby facilitating further processing of the uplink positioning reference signal configuration when the timer expires.

Exemplarily, in the case of continuing to use the saved uplink positioning reference signal configuration, starting a timer associated with the uplink positioning reference signal configuration may include:

in the case that the UE returns to the RRC non-connected state and continues to use the saved uplink positioning reference signal configuration, starting the timer associated with the uplink positioning reference signal configuration.

In one embodiment, starting a timer associated with an uplink positioning reference signal configuration includes:
starting continued timing of the timer in the paused state;
   or,
starting retiming of the timer in the stopped state.

Here, starting the continued timing of the timer in the paused state is equivalent to continuing the timing based on the timing value of the previous pause timing of the timer.

Here, starting the retiming of the timer in the stopped state is equivalent to restarting the timing based on the initial value of the timer.

In one embodiment, the indication information included in the RRC release message includes:
first indication information used to instruct the UE to continue to use the uplink positioning reference signal configuration.

In one embodiment, the RRC release message may instruct the UE to continue to use the uplink positioning reference signal configuration after entering the RRC non-connected state through the first indication information. At this time, if the RRC release message does not carry the first indication information, it means that the first network device instructs the UE not to continue to use the saved uplink positioning reference signal configuration.

In another embodiment, the RRC release message may indicate through the first indication information whether the UE continues to use the uplink positioning reference signal configuration after entering the RRC non-connected state. Then, whether the UE continues to use the saved uplink positioning reference signal configuration is determined according to the specific content of the first indication information.

In some embodiments, if the RRC release message explicitly or implicitly indicates that the UE does not continue to use the uplink positioning reference signal configuration after entering the RRC non-connected state, the UE may release the uplink positioning reference signal configuration.

In one embodiment, the method further includes:
after receiving the RRC release message including the first indication information, the RRC layer of the UE instructing the medium access control (MAC) layer of the UE to start a timer.

Since the release of the uplink positioning reference signal configuration is related to the timer of the MAC layer, after receiving the first indication information and determining that the UE continues to use the uplink positioning reference signal configuration, the RRC layer of the UE generates one instruction, and after the instruction is transmitted to the MAC layer, the MAC layer starts the timer based on the instruction.

The RRC release message only needs to carry one piece of first indication information, and the UE may automatically start the related timer, which has the characteristic of low signaling overhead.

In one embodiment, the indication information included in the RRC release message includes:
second indication information used to instruct the UE to continue to use the uplink positioning reference signal configuration;
third indication information used to instruct to start a timer associated with the uplink positioning reference signal configuration, where the timer is used to time the effective duration of the uplink positioning reference signal configuration.

The RRC layer of the UE receives the second indication information, and may determine whether to continue to use the uplink positioning reference signal configuration according to the second indication information.

Since the release of the uplink positioning reference signal configuration is related to the timer of the MAC layer, at the MAC layer of the UE, the timer is started according to the third indication information.

The RRC release message may include the second indication information and the third indication information to respectively instruct the UE to continue to use the uplink positioning reference signal configuration and to start a related timer.

The second indication information and the third indication information may be carried by different bits in the RRC release message.

In one embodiment, the RRC release message may instruct the UE to continue to use the uplink positioning reference signal configuration after entering the RRC non-connected state through the second indication information. If the RRC release message does not carry the second indication information, it means that the first network device instructs the UE not to continue to use the saved uplink positioning reference signal configuration.

In one embodiment, the RRC release message may indicate through the second indication information whether the UE continues to use the uplink positioning reference signal configuration after entering the RRC non-connected state. Whether the UE continues to use the saved uplink positioning reference signal configuration is determined by the specific content of the second indication information.

In some embodiments, the RRC release message explicitly indicates or implicitly indicates that the UE does not continue to use the uplink positioning reference signal configuration after entering the RRC non-connected state, and the UE may release the uplink positioning reference signal configuration.

If the UE releases the uplink positioning reference signal configuration, the MAC layer of the UE may also release the related timer at the same time. Releasing the related timer here may include: releasing the configuration information of the timer and/or clearing the timing value of the last pause of the timer.

In some embodiments, the RRC release message instructs the UE to start a timer associated with the uplink positioning reference signal configuration through the third indication information. If the RRC release message does not carry the third indication information, it means that the first network device instructs the UE not to start the timer associated with the uplink positioning reference signal configuration.

In some embodiments, the RRC release message instructs the UE to start a timer associated with the uplink positioning reference signal configuration through the third indication information in the case that the UE returns to the RRC non-connected state and continues to use the saved uplink positioning reference signal configuration.

In some embodiments, the third indication information may also be used to indicate a start mode of the timer. The start mode may involve: starting the continued timing based on the timing value of the previous pause timing; or restarting the timing based on the initial value of the timer.

In one embodiment, referring to FIG. 15, which is a schematic diagram of a disclosed method for processing an uplink positioning reference signal configuration, the method is performed by a first network device of a first cell, and the method includes the following step.

In S10: a radio resource control (RRC) release message is sent, where the RRC release message is used to enable a user equipment (UE) in an RRC connected state to enter an RRC non-connected state, and to enable the UE to continue to use a saved uplink positioning reference signal configuration.

Exemplarily, the first network device may be any access device shown in FIG. 1, such as an evolved access device (eNB), or an access device (gNB) adopting a centralized distributed architecture in the 5G system, or a transmission and reception point (TRP), etc.

Exemplarily, the first network device has a first cell, and the first cell is the cell where the UE is currently located.

Exemplarily, the RRC release message instructs the UE to enter the RRC non-connected state from the RRC connected state. The RRC non-connected state includes an RRC idle state and/or an RRC inactive state.

Exemplarily, the uplink positioning reference signal configuration may include at least one of the following:
a resource configuration of the uplink positioning reference signal, at least indicating a sending time and frequency domain resource for the terminal to send the uplink positioning reference signal;
a measurement reporting configuration of the uplink positioning reference signal, at least indicating a sending time and frequency domain resource for the terminal to report the measurement result;
a timing configuration, used to indicate an effective duration of the uplink positioning reference signal configuration, where the timing configuration may include but is not limited to: a value of the time alignment timer (TAT);
an area configuration, indicating a validity area of the uplink positioning reference signal configuration.

Exemplarily, the indication information included in the RRC release message may instruct the UE to continue to use the saved uplink positioning reference signal configuration.

Exemplarily, the indication information included in the RRC release message includes first indication information, and the indication information may further include second indication information and third indication information.

Exemplarily, the preset information may be carried (or borne) by a preset field, that is, the indication information included in the RRC release message includes a preset field, and the information content carried by the preset field is information content indicating whether the UE continues to use the saved uplink positioning reference signal configuration.

Exemplarily, the RRC release message is used to instruct the UE to continue to use the saved uplink positioning reference signal configuration.

After receiving the RRC release message, the UE may enter the RRC non-connected state from the RRC connected state according to the RRC release message, and the UE disconnects the RRC connection with the network device. At the same time, the UE may determine whether to continue to use the saved uplink positioning reference signal configuration according to the indication information included in the RRC release message. The UE determines to continue to use the saved uplink positioning reference signal configuration according to the indication information included in the RRC release message. If the RRC release message indicates continuing to use the saved uplink positioning reference signal configuration, the UE sends the uplink positioning reference signal according to the saved uplink positioning reference signal configuration.

In another embodiment, the RRC release message includes:
first indication information used to instruct the UE to use the uplink positioning reference signal configuration.

Since the release of the uplink positioning reference signal configuration is related to the timer of the MAC layer, after receiving the first indication information to determine that the UE continues to use the uplink positioning reference signal configuration, the RRC layer of the UE generates an instruction, and after the instruction is transmitted to the MAC layer, the MAC layer starts the timer based on the instruction.

The RRC release message only needs to carry one piece of first indication information, and the UE may automatically start the related timer, which has the characteristic of low signaling overhead.

In another embodiment, the RRC release message includes:
second indication information used to instruct the UE to continue to use the uplink positioning reference signal configuration;
third indication information used to instruct to start a timer associated with the uplink positioning reference signal configuration, where the timer is used to time the effective duration of the uplink positioning reference signal configuration.

The RRC layer of the UE receives the second indication information, and determines whether to continue to use the uplink positioning reference signal configuration according to the second indication information.

Since the release of the uplink positioning reference signal configuration is related to the timer of the MAC layer, the timer is started at the MAC layer of the UE based on the third indication information.

The RRC release message may include the second indication information and the third indication information to respectively instruct the UE to continue to use the uplink positioning reference signal configuration and to start a related timer.

The second indication information and the third indication information may be carried by different bits in the RRC release message.

In one embodiment, the RRC release message may instruct the UE to continue to use the uplink positioning reference signal configuration after entering the RRC non-connected state through the second indication information. If the RRC release message does not carry the second indication information, it means that the first network device instructs the UE not to continue to use the saved uplink positioning reference signal configuration.

In one embodiment, the RRC release message indicates whether the UE continues to use the uplink positioning reference signal configuration after entering the RRC non-connected state through the second indication information. Whether the UE continues to use the saved uplink positioning reference signal configuration is determined by the specific content of the second indication information.

In some embodiments, the RRC release message explicitly indicates or implicitly indicates that the UE does not continue to use the uplink positioning reference signal configuration after entering the RRC non-connected state, and the UE may release the uplink positioning reference signal configuration.

If the UE releases the uplink positioning reference signal configuration, the MAC layer of the UE may also release the related timer at the same time. Releasing the related timer here may include: releasing the configuration information of the timer and/or clearing the timing value of the last pause of the timer.

In some embodiments, the RRC release message instructs the UE to start a timer associated with the uplink positioning reference signal configuration through the third indication information. If the RRC release message does not carry the third indication information, it means that the first network device instructs the UE not to start the timer associated with the uplink positioning reference signal configuration.

In some embodiments, the RRC release message instructs the UE to start a timer associated with the uplink positioning reference signal configuration through the third indication information in the case that the UE returns to the RRC non-connected state and continues to use the saved uplink positioning reference signal configuration.

In some embodiments, the third indication information may also be used to indicate a start mode of the timer. The start mode may involve: starting the continued timing based on the timing value of the previous pause timing; or restarting the timing based on the initial value of the timer.

In another embodiment, referring to FIG. 16, which is a schematic diagram of a disclosed method for processing an uplink positioning reference signal configuration, the method is performed by a first network device of a first cell, and the method further includes the following step.

In S20: in the case that a UE in an RRC connected state switches from a first cell to a second cell and the UE saves an uplink positioning reference signal configuration for an RRC non-connected state, fourth indication information is sent to a second network device, where the fourth indication information indicates that the UE saves the uplink positioning reference signal configuration for the RRC non-connected state.

Exemplarily, the first cell is a source cell of the UE, and the second cell is a target cell.

Exemplarily, the second cell is a cell within a validity area of the uplink positioning reference signal configuration in the RRC non-connected state.

After the UE in the RRC connected state performs a cell handover, since the target cell to which the RRC connected state is switched is a cell within the validity area, the UE continues to save the uplink positioning reference signal configuration. In order to facilitate the second network device to subsequently know that the uplink positioning reference signal configuration is saved in the UE, the first network device may inform the second network device through any message during the cell handover procedure.

Exemplarily, the fourth indication information is included in a cell handover message.

In some embodiments, any message in the handover procedure may also include: a context request message for the second network device to obtain the UE context from the first network device, etc.

In another embodiment, referring to FIG. 17, which is a schematic diagram of another disclosed method for processing an uplink positioning reference signal configuration, the method is performed by a second network device of a second cell, and includes the following step.

In S1: fourth indication information sent by the first network device of the first cell is received; where the fourth indication information is used to indicate that the UE in the RRC connected state switched from the first cell to the second cell saves the uplink positioning reference signal configuration for the RRC non-connected state.

Exemplarily, the second network device may be any access device shown in FIG. 1, such as an evolved access device (eNB), or an access device (gNB) adopting a centralized distributed architecture in the 5G system, or a transmission and reception point (TRP), etc.

Exemplarily, the first cell is a source cell of the UE, and the second cell is a target cell.

Exemplarily, the second cell is a cell within a validity area of the uplink positioning reference signal configuration in the RRC non-connected state.

After the UE in the RRC connected state performs a cell handover, since the target cell to which the RRC connection state is switched is a cell within the validity area, the UE continues to save the uplink positioning reference signal configuration. Receiving the fourth indication information can facilitate the second network device to subsequently know through the fourth indication information that the uplink positioning reference signal configuration is saved in the UE, and the second network device can know it by receiving any message from the first network device during the cell handover procedure.

Exemplarily, the fourth indication information is included in a cell handover message.

In some embodiments, any message in the handover procedure may also include: a context request message for the second network device to obtain the UE context from the first network device, etc.

Exemplarily, the uplink positioning reference signal configuration may include at least one of the following:
a resource configuration of the uplink positioning reference signal, at least indicating a sending time and frequency domain resource for the terminal to send the uplink positioning reference signal;
a measurement reporting configuration of the uplink positioning reference signal, at least indicating a sending time and frequency domain resource for the terminal to report the measurement result;
a timing configuration, used to indicate the effective duration of the uplink positioning reference signal configuration, where the timing configuration may include but is not limited to: a value of the time alignment timer (TAT);

an area configuration, indicating a validity area of the uplink positioning reference signal configuration.

In some embodiments, the method further includes:
the second network device sending an RRC release message to the UE.

The RRC release message is used for the UE to enter the RRC non-connected state and continue to use the saved uplink positioning reference signal configuration.

Exemplarily, the RRC release message sent by the second network device may include:
first indication information used to instruct the UE to use the uplink positioning reference signal configuration.

The RRC release message only needs to carry one piece of first indication information, and the UE may automatically start the related timer, which has the characteristic of low signaling overhead.

In one embodiment, the RRC release message may instruct the UE to continue to use the uplink positioning reference signal configuration after entering the RRC non-connected state through the first indication information. At this time, if the RRC release message does not carry the first indication information, it means that the second network device instructs the UE not to continue to use the saved uplink positioning reference signal configuration.

In another embodiment, the RRC release message may instruct the UE through the first indication information whether to continue to use the uplink positioning reference signal configuration after entering the RRC non-connected state. At this time, whether to continue to use the saved uplink positioning reference signal configuration is determined according to the specific content of the first indication information.

In some embodiments, if the RRC release message explicitly or implicitly indicates that the UE does not continue to use the uplink positioning reference signal configuration after entering the RRC non-connected state, the UE may release the uplink positioning reference signal configuration.

In another embodiment, the RRC release message includes:
second indication information, used to instruct the UE to continue to use the uplink positioning reference signal configuration;
third indication information, used to instruct to start a timer associated with the uplink positioning reference signal configuration.

The RRC layer of the UE receives the second indication information, and may determine whether to continue to use the uplink positioning reference signal configuration according to the second indication information.

Since the release of the uplink positioning reference signal configuration is related to the timer of the MAC layer, at the MAC layer of the UE, the timer is started according to the third indication information.

The RRC release message may include the second indication information and the third indication information to respectively instruct the UE to continue to use the uplink positioning reference signal configuration and to start a related timer.

The second indication information and the third indication information may be carried by different bits in the RRC release message.

In one embodiment, the RRC release message may instruct the UE to continue to use the uplink positioning reference signal configuration after entering the RRC non-connected state through the second indication information. If the RRC release message does not carry the second indication information, it means that the second network device instructs the UE not to continue to use the saved uplink positioning reference signal configuration.

In one embodiment, the RRC release message may instruct the UE through the second indication information whether to continue to use the uplink positioning reference signal configuration after entering the RRC non-connected state. Whether the UE continues to use the saved uplink positioning reference signal configuration is determined by the specific content of the second indication information.

In some embodiments, the RRC release message explicitly indicates or implicitly indicates that the UE does not continue to use the uplink positioning reference signal configuration after entering the RRC non-connected state, and the UE may release the uplink positioning reference signal configuration.

If the UE releases the uplink positioning reference signal configuration, the MAC layer of the UE may also release the related timer at the same time. Releasing the related timer here may include: releasing the configuration information of the timer and/or clearing the timing value of the last pause of the timer.

In some embodiments, the RRC release message instructs the UE to start a timer associated with the uplink positioning reference signal configuration through the third indication information. If the RRC release message does not carry the third indication information, it means that the first network device instructs the UE not to start the timer associated with the uplink positioning reference signal configuration.

In some embodiments, the RRC release message instructs the UE to start a timer associated with the uplink positioning reference signal configuration through the third indication information in the case that the UE returns to the RRC non-connected state and continues to use the saved uplink positioning reference signal configuration.

In some embodiments, the third indication information may also be used to indicate a start mode of the timer. The start mode may involve: starting the continued timing based on the timing value of the previous pause timing; or restarting the timing based on the initial value of the timer.

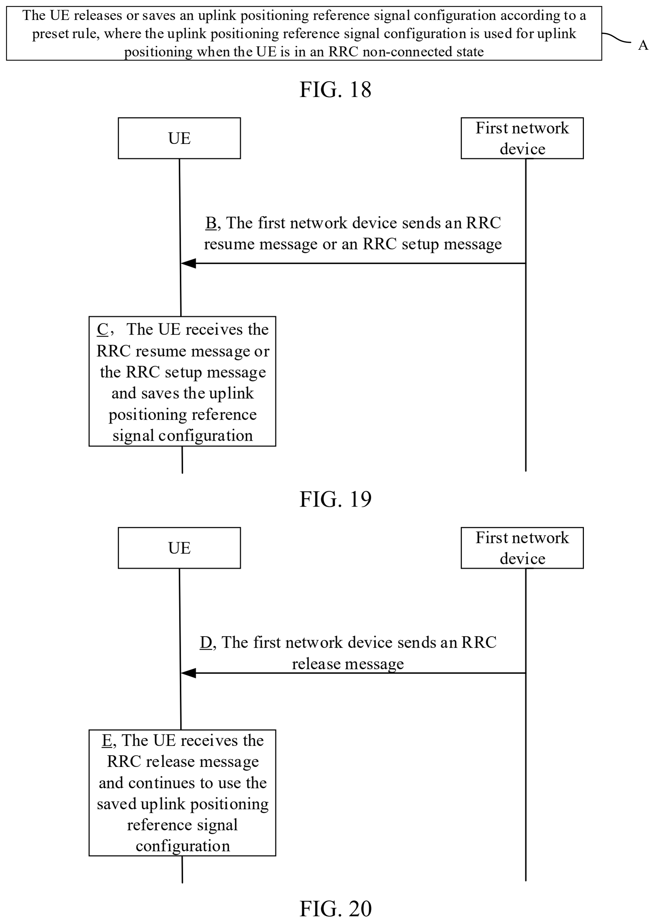

In another embodiment, referring to FIG. 18, which is a schematic diagram of another disclosed method for processing an uplink positioning reference signal configuration, the method is performed by a wireless communication system, the wireless communication system includes a user equipment (UE), and the method includes the following steps.

In step A: the UE releases or saves an uplink positioning reference signal configuration according to a preset rule, where the uplink positioning reference signal configuration is used for uplink positioning when the UE is in an RRC non-connected state.

Exemplarily, the user equipment (UE) may be any communication device shown in FIG. 1, specifically: a mobile phone, a tablet computer, a wearable device, a vehicle-mounted device, a smart home device, a smart office device and/or a flight device.

Before performing step A, the method further includes:
receiving an uplink positioning reference signal configuration sent by the first network device.

Exemplarily, receiving an uplink positioning reference signal configuration sent by the first network device includes:
the UE receiving an RRC message instructing the UE to enter an RRC non-connected state from an RRC connected state, where the RRC message includes: an uplink positioning reference signal configuration.

Exemplarily, the UE receives an RRC release message, which indicates that the UE enters an RRC non-connected state from an RRC connected state. The RRC non-connected state includes an RRC idle state and/or an RRC inactive state.

The uplink positioning reference signal configuration may include at least one of the following:
a resource configuration of an uplink positioning reference signal, at least indicating a sending time and frequency domain resource for the terminal to send the uplink positioning reference signal;
a measurement reporting configuration of the uplink positioning reference signal, at least indicating a sending time and frequency domain resources for the terminal to report the measurement result;
a timing configuration, used to indicate the effective duration of the uplink positioning reference signal, where the timing configuration may include but is not limited to: the value of the time alignment timer (TAT);
an area configuration, indicating a validity area of the uplink positioning reference signal configuration.

Exemplarily, the preset rule may be any predefined rule. The preset rule may be agreed upon by a protocol, or indicated by the uplink positioning reference signal configuration information. For example, the uplink positioning reference signal configuration may also include a release rule configuration of the uplink positioning reference signal configuration.

In some embodiments, releasing or saving the uplink positioning reference signal configuration according to a preset rule may include:
when a release event that satisfies the release rule configuration is detected, releasing the uplink positioning reference signal configuration; otherwise, continuing to save the uplink positioning reference signal configuration.

Also exemplarily, releasing or saving the uplink positioning reference signal configuration according to a preset rule may include:
continuing to save the uplink positioning reference signal configuration during cell reselection;
   and/or,
when the UE resumes the RRC connection with the current serving cell, continuing to save the uplink positioning reference signal configuration;
   and/or,
when the current position of the UE is within the validity area of the uplink positioning reference signal configuration, continuing to save the uplink positioning reference signal configuration;
   and/or,
when the UE moves out of the validity area of the uplink positioning reference signal configuration, releasing the uplink positioning reference signal configuration.

After the UR enters the non-connected state from the connected state, it may enter the connected state from the non-connected state again subsequently. If the UE has saved the previously received uplink positioning reference signal configuration, the saved uplink positioning reference signal configuration can continue to be used, reducing the request for the uplink positioning reference signal configuration sent by the UE to the first network device, thereby reducing signaling overhead.

That is, in the embodiments of the present disclosure, the UE may release or save the uplink positioning reference signal configuration used in the RRC non-connected state according to the preset rule. In this way, the release of the uplink positioning reference signal configuration used in the RRC non-connected state can be reduced when the UE does not need to release the uplink positioning reference signal configuration, thereby reducing the request for the uplink positioning reference signal configuration to the first network device again due to redundant release of the UE, thereby reducing signaling overhead.

In one embodiment, the uplink positioning reference signal configuration for the UE in the RRC non-connected state has a validity area.

Within the validity area, the uplink positioning reference signal configuration is valid, and outside the validity area, the uplink positioning reference signal configuration is invalid.

Exemplarily, the validity area may include one or more cells.

The area configuration indicating the validity area may include:
an area identifier, where different areas have different area identifiers; the area identifier may include identifiers of geographical areas such as tracking area identifier and/or wireless access notification area identifier;
a cell identifier, indicating a cell(s) included in the validity area. The cell identifier may be carried by a cell list.

In one embodiment, the validity area of the uplink positioning reference signal configuration may be a connected continuous area.

In one embodiment, if the validity area includes a plurality of cells, the plurality of cells are distributed continuously or adjacently.

In another embodiment, referring to FIG. 19, which is a schematic diagram of another disclosed method for processing an uplink positioning reference signal configuration, the method is performed by a wireless communication system, the wireless communication system further includes a first network device, and the method further includes the following steps.

In step B: the first network device sends an RRC resume message or an RRC setup message.

In step C: the UE receives the RRC resume message or the RRC setup message and saves the uplink positioning reference signal configuration.

The first network device may be any access device shown in FIG. 1, such as an evolved access device (eNB), or an access device (gNB) using a centralized distributed architecture in the 5G system, or a transmission and reception point (TRP), etc.

The radio resource control (RRC) resume message (RRC resume message) is used to instruct the UE in the RRC inactive state to enter the RRC connected state;
The radio resource control (RRC) setup message (RRC setup message) is used to instruct the UE in the RRC connected state to enter the RRC connected state.

Exemplarily, the RRC layer of the terminal receives a radio resource control (RRC) resume message (RRC resume message) sent by the first network device; the RRC layer of the terminal receives a radio resource control (RRC) setup message (RRC setup message) sent by the first network device.

After entering the RRC connected state from the RRC non-connected state, the UE continues to save the uplink positioning reference signal configuration when the UE is in the RRC non-connected state. In this way, when the UE enters the RRC non-connected state again, it can send an uplink positioning reference signal based on the saved uplink positioning reference signal configuration without requesting the uplink positioning reference signal configuration again.

In another embodiment, referring to FIG. 20, which is a schematic diagram of another disclosed method for processing an uplink positioning reference signal configuration, the method is performed by a wireless communication system, the wireless communication system further includes a first network device, and the method further includes the following steps.

In step D: the first network device sends an RRC release message.

In step E: the UE receives the RRC release message and continues to use the saved uplink positioning reference signal configuration.

Exemplarily, the RRC release message indicates that the UE enters an RRC non-connected state from an RRC connected state. The RRC non-connected state includes an RRC idle state and/or an RRC inactive state.

Exemplarily, the indication information included in the RRC release message may instruct the UE to continue to use the saved uplink positioning reference signal configuration.

Exemplarily, the indication information included in the RRC release message includes first indication information; or, the indication information included in the RRC release message includes message content such as second indication information and third indication information.

Exemplarily, the message content may be carried (or borne) by a preset field, that is, the message content of the RRC release message includes a preset field, and the information content carried by the preset field is information content indicating whether the UE continues to use the saved uplink positioning reference signal configuration.

Exemplarily, the RRC release message is used to instruct the UE to continue to use the saved uplink positioning reference signal configuration.

After receiving the RRC release message, the UE can enter the RRC non-connected state from the RRC connection state according to the RRC release message, and the UE disconnects the RRC connection with the first network device. At the same time, the UE can determine whether to continue to use the saved uplink positioning reference signal configuration according to the indication information included in the RRC release message. The UE determines to continue to use the saved uplink positioning reference signal configuration according to the indication information included in the RRC release message. If the RRC release message continues to use the saved uplink positioning reference signal configuration, the UE sends an uplink positioning reference signal according to the saved uplink positioning reference signal configuration.

In another embodiment, the RRC release message includes:
first indication information used to instruct the UE to use the uplink positioning reference signal configuration.

In one embodiment, the RRC release message may instruct the UE to continue to use the uplink positioning reference signal configuration after entering the RRC non-connected state through the first indication information. At this time, if the RRC release message does not carry the first indication information, it means that the first network device instructs the UE not to continue to use the saved uplink positioning reference signal configuration.

In another embodiment, the RRC release message may instruct the UE through the first indication information whether to continue to use the uplink positioning reference signal configuration after entering the RRC non-connected state. At this time, whether the UE continues to use the saved uplink positioning reference signal configuration is determined according to the specific content of the first indication information.

In some embodiments, if the RRC release message explicitly or implicitly indicates that the UE does not continue to use the uplink positioning reference signal configuration after entering the RRC non-connected state, the UE may release the uplink positioning reference signal configuration.

In one embodiment, the method further includes:
after the UE receives the RRC release message including the first indication information, the RRC layer of the UE instructing the medium access control (MAC) layer of the UE to start a timer.

Since the release of the uplink positioning reference signal configuration is related to the timer of the MAC layer, after receiving the first indication information and determining that the UE continues to use the uplink positioning reference signal configuration, the RRC layer of the UE generates an instruction, and after the instruction is transmitted to the MAC layer, the MAC layer starts a timer based on the instruction.

The RRC release message only needs to carry one piece of first indication information, and the UE may automatically start the related timer, which has the characteristic of low signaling overhead.

In another embodiment, the RRC release message includes:
second indication information used to instruct the UE to continue to use the uplink positioning reference signal configuration;
third indication information used to instruct to start a timer associated with the uplink positioning reference signal configuration.

Since the release of the uplink positioning reference signal configuration is related to the timer of the MAC layer, the timer is started at the MAC layer of the UE based on the third indication information.

The RRC layer of the UE receives the second indication information, and may determine whether to continue to use the uplink positioning reference signal configuration according to the second indication information.

Since the release of the uplink positioning reference signal configuration is related to the timer of the MAC layer, at the MAC layer of the UE, the timer is started according to the third indication information.

The RRC release message may include the second indication information and the third indication information to respectively instruct the UE to continue to use the uplink positioning reference signal configuration and to start a related timer.

The second indication information and the third indication information may be carried by different bits in the RRC release message.

In one embodiment, the RRC release message may instruct the UE to continue to use the uplink positioning reference signal configuration after entering the RRC non-connected state through the second indication information. If the RRC release message does not carry the second indication information, it means that the first network device instructs the UE not to continue to use the saved uplink positioning reference signal configuration.

In one embodiment, the RRC release message may instruct the UE through the second indication information whether to continue to use the uplink positioning reference signal configuration after entering the RRC non-connected state. Whether the UE continues to use the saved uplink positioning reference signal configuration is determined by the specific content of the second indication information.

In some embodiments, the RRC release message explicitly indicates or implicitly indicates that the UE does not continue to use the uplink positioning reference signal configuration after entering the RRC non-connected state, and the UE may release the uplink positioning reference signal configuration.

If the UE releases the uplink positioning reference signal configuration, the MAC layer of the UE may also release the related timer at the same time. Releasing the related timer here may include: releasing the configuration information of the timer and/or clearing the timing value of the last pause of the timer.

In some embodiments, the RRC release message instructs the UE to start a timer associated with the uplink positioning reference signal configuration through the third indication information. If the RRC release message does not carry the third indication information, it means that the first network device instructs the UE not to start the timer associated with the uplink positioning reference signal configuration.

In some embodiments, the RRC release message instructs the UE to start a timer associated with the uplink positioning reference signal configuration through the third indication information in the case that the UE returns to the RRC non-connected state and continues to use the saved uplink positioning reference signal configuration.

In some embodiments, the third indication information may also be used to indicate a start mode of the timer. The start mode may involve: starting the continued timing based on the timing value of the previous pause timing; or restarting the timing based on the initial value of the timer.

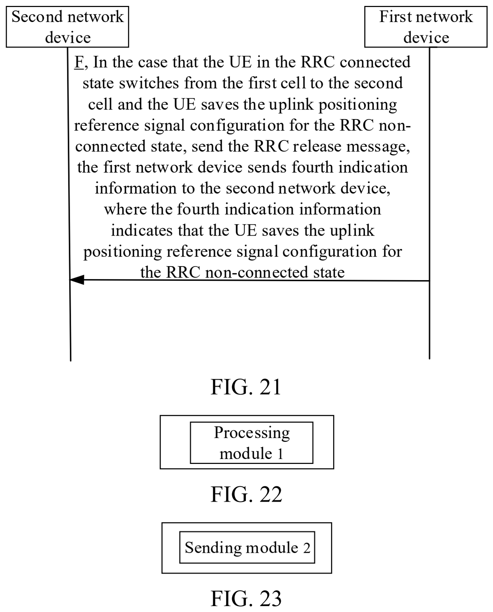

In another embodiment, referring to FIG. 21, which is a schematic diagram of another disclosed method for processing an uplink positioning reference signal configuration, the method is performed by a wireless communication system, the wireless communication system also includes a second network device, and the method further includes the following step.

In step F: in the case that the UE in the RRC connected state switches from the first cell to the second cell and the UE saves the uplink positioning reference signal configuration for the RRC non-connected state, the first network device sends fourth indication information to the second network device, where the fourth indication information indicates that the UE saves the uplink positioning reference signal configuration for the RRC non-connected state.

Exemplarily, the second network device may be any access device shown in FIG. 1, such as an evolved access device (eNB), or an access device (gNB) adopting a centralized distributed architecture in the 5G system, or a transmission and reception point (TRP), etc.

Exemplarily, the first network device has a first cell, and the first cell is the cell where the UE is currently located.

Exemplarily, the first cell is a source cell of the UE, and the second cell is a target cell.

Exemplarily, the second cell is a cell within a validity area of an uplink positioning reference signal configuration in an RRC non-connected state.

After the UE in the RRC connected state performs a cell handover, since the target cell to which the RRC connected state is switched is a cell within the validity area, the UE continues to save the uplink positioning reference signal configuration. In order to facilitate the second network device to subsequently know that the uplink positioning reference signal configuration is saved in the UE, the first network device may inform the second network device through any message during the cell handover procedure.

Exemplarily, the fourth indication information is included in a cell handover message.

In some embodiments, any message in the handover procedure may also include: a context request message for the second network device to obtain the UE context from the first network device, etc.

In another embodiment, a method for processing an uplink positioning reference signal configuration is also provided. The method is performed by a wireless communication system, and the method further includes:
the second network device receiving fourth indication information sent by the first network device of the first cell, where the fourth indication information is used to indicate that the UE in the RRC connected state switched from the first cell to the second cell has saved the uplink positioning reference signal configuration for the RRC non-connected state.

In another embodiment, referring to FIG. 22, which is a schematic diagram of a disclosed apparatus for processing an uplink positioning reference signal configuration, the apparatus includes:
a processing module 1, configured to release or save an uplink positioning reference signal configuration according to a preset rule, where the uplink positioning reference signal configuration is used for uplink positioning when the UE is in an RRC non-connected state.

In another embodiment, referring to FIG. 23, which is a schematic diagram of another disclosed apparatus for processing an uplink positioning reference signal configuration, the apparatus includes:
a sending module 2, configured to send to a user equipment (UE) a message that causes the UE in an RRC non-connected state to enter an RRC connected state, where the message is used for the UE to save an uplink positioning reference signal configuration.

In another embodiment, a communication device is also disclosed, including a processor, a transceiver, a memory, and an executable program stored in the memory and capable of being run by the processor, where the processor executes the method for processing an uplink positioning reference signal configuration provided in any of the above embodiments when running the executable program.

In another embodiment, a computer storage medium is also disclosed, where the computer storage medium stores an executable program; after the executable program is executed by the processor, it can implement the processing method for uplink positioning reference signal configuration provided by any of the above embodiments.

In another embodiment, the first network device configures an uplink positioning reference signal configuration in an RRC inactive state for the UE, and the UE releases the uplink positioning reference signal configuration in the following circumstances:
the UE performs cell reselection;
the RRC layer of the UE receives a release request from the Medium Access Control (MAC) layer of the terminal, requesting the RRC layer to release the uplink positioning reference configuration;
the RRC layer of the UE receives a radio resource control (RRC) resume message (RRC resume message) sent by the first network device, which is used to instruct the UE in the RRC inactive state to enter the RRC connected state;
the RRC layer of the UE receives a radio resource control (RRC) setup message (RRC setup message) sent by the first network device, which is used to instruct the UE in the RRC connected state to enter the RRC connected state.

However, for the uplink positioning reference signal configuration associated with the validity area, the UE does not necessarily need to release the uplink positioning reference signal configuration after performing cell reselection.

When the UE receives an RRC resume message or an RRC setup message, the UE may stop transmitting SRS without releasing the SRS configuration.

In one embodiment, the first network device configures an uplink positioning reference signal configuration associated with a validity area for the UE, and a release condition of the uplink positioning reference signal configuration associated with the validity area includes at least one of the following:
the UE performs cell reselection and the target cell reselected by the UE is not within the validity area of the uplink positioning reference signal configuration;
the UE receives the RRC resume message, saves the uplink positioning reference signal configuration associated with the validity area, and the medium access control (MAC) layer in the UE stops the timer associated with the uplink positioning reference signal configuration;
the UE receives the RRC setup message, saves the uplink positioning reference signal configuration associated with the validity area, and the medium access control (MAC) layer in the UE stops the timer associated with the uplink positioning reference signal configuration;
the UE performs cell handover and releases the uplink positioning reference signal configuration associated with the validity area;
the UE receives an RRC release message, which instructs the UE to use the previously saved uplink positioning reference signal configuration, and the medium access control (MAC) layer of the UE starts a timer associated with the uplink positioning reference signal configuration.

In one embodiment, a method for a UE to process an uplink positioning reference signal configuration associated with a validity area is disclosed, including:
the UE saving or releasing the uplink positioning reference signal configuration associated with the validity area.

In one embodiment, the first network device configures an uplink positioning reference signal configuration associated with a validity area for the UE. The UE in an RRC non-connected state performs cell reselection and the target cell of the cell reselection is located outside the validity area, the UE releases the uplink positioning reference signal configuration, and the medium access control (MAC) layer of the UE stops the timer associated with the uplink positioning reference signal configuration.

In one embodiment, the validity area is indicated by a PCI in a physical cell identifier (PCI) list, for example, PCI1, PCI2 and/or PCI3. The UE performs a cell reselection. If the PCI of the target cell selected by the UE is PCI5, the UE releases the uplink positioning reference signal configuration.

In one embodiment, the first network device configures the UE with an uplink positioning reference signal configuration associated with the validity area, the UE receives a radio resource control setup (RRC setup) message, the UE saves the uplink positioning reference signal configuration associated with the validity area, and the medium access control (MAC) layer of the UE stops the timer associated with the uplink positioning reference signal configuration.

In one embodiment, the first network device configures the UE with an uplink positioning reference signal configuration associated with the validity area, the UE receives a radio resource control resume (RRC resume) message, the UE saves the uplink positioning reference signal configuration associated with the validity area, and the medium access control (MAC) layer of the UE stops the timer associated with the uplink positioning reference signal configuration.

In one embodiment, the first network device configures the UE with an uplink positioning reference signal configuration associated with the validity area, and when the UE performs cell handover, the UE releases the uplink positioning reference signal configuration associated with the validity area.

In one embodiment, the first network device configures the UE with an uplink positioning reference signal configuration associated with the validity area. When the UE performs cell handover and the target cell is outside the validity area, the UE releases the uplink positioning reference signal configuration associated with the validity area.

In one embodiment, the UE receives an RRC release message, and the RRC release message instructs the UE to continue to use the saved uplink positioning reference signal configuration associated with the validity area, then the UE continues to use the saved uplink positioning reference signal configuration and sends the uplink positioning reference signal according to the saved uplink positioning reference signal configuration.

In one embodiment, the Medium Access Control (MAC) layer of the UE starts a timer associated with the uplink positioning reference signal configuration.

In one embodiment, the UE receives an RRC release message, and the UE saves the uplink positioning reference signal configuration associated with the validity area, then the UE continues to use the saved uplink positioning reference signal configuration to send the uplink positioning reference signal according to the indication information included in the RRC release message, and the Medium Access Control (MAC) layer of the UE starts the timer associated with the uplink positioning reference signal configuration.

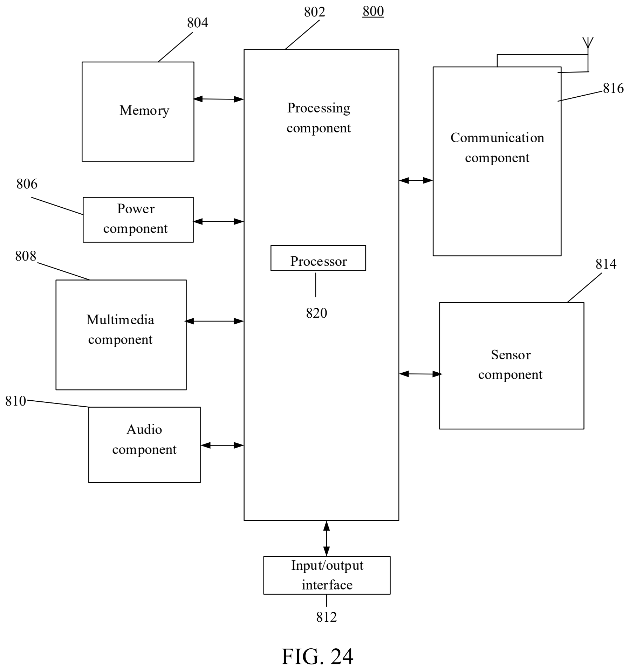

FIG. 24 is a block diagram of a UE 800 according to an exemplary embodiment. For example, the UE 800 may be a mobile phone, a computer, a digital broadcast user equipment, a messaging device, a game console, a tablet device, a medical device, a fitness device, a personal digital assistant, etc.

Referring to FIG. 24, UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the UE 800, such as operations associated with display, phone calls, data communications, camera operations, and recording operations. The processing component 802 may include one or more processors 820 to execute instructions to generate all or part of the steps of the above-mentioned methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the UE 800. Examples of such data include instructions for any application or method operating on the UE 800, contact data, phone book data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 806 provides power to various components of the UE 800. The power component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, swipe, and gestures on the touch panel. The touch sensor may not only sense the boundaries of the touch or swipe action, but also detect the duration and pressure associated with the touch or swipe operation. In some embodiments, the multimedia component 808 includes a front camera and/or a rear camera. When the UE 800 is in an operating mode, such as a shooting mode or a video mode, the front camera and/or the rear camera may receive external multimedia data. Each of the front camera and rear camera may be a fixed optical lens system or have a focal length and optical zoom capability.

The audio component 810 is configured to output and/or input audio signals. For example, the audio component 810 includes a microphone (MIC), and when the UE 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between processing component 802 and peripheral interface modules, such as keyboards, click wheels, buttons, etc. These buttons may include but are not limited to: a home button, a volume button, a start button, and a lock button.

The sensor component 814 includes one or more sensors for providing various aspects of status assessment for UE 800. For example, the sensor component 814 can detect the open/closed state of UE 800, the relative positioning of components, such as the display and keypad of UE 800, and the sensor component 814 can also detect the position change of UE 800 or a component of UE 800, the presence or absence of user contact with UE 800, the orientation or acceleration/deceleration of UE 800 and the temperature change of UE 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between UE 800 and other devices. UE 800 can access a wireless network based on a communication standard, such as Wi-Fi, 4G or 5G, or a combination thereof. In an exemplary embodiment, the communication component 816 receives a broadcast signal or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, UE 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an exemplary embodiment, a non-transitory computer-readable storage medium including instructions is also provided, such as a memory 804 including instructions, and the instructions can be executed by the processor 820 of the UE 800 to generate the above methods. The readable storage medium may be a ROM, a random access memory (RAM), a CD-ROM, a magnetic tape, a floppy disk, an optical data storage device, and the like.

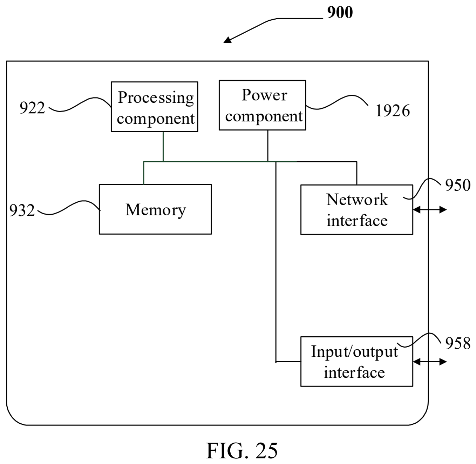

As shown in FIG. 25, an embodiment of the present disclosure shows a structure of an access device. For example, the communication device 900 may be provided as a network device. The communication device may be various network elements such as the aforementioned access network element and/or network function.

Referring to FIG. 25, the communication device 900 includes a processing component 922, which further includes one or more processors, and a memory resource represented by a memory 932 for storing instructions that can be executed by the processing component 922, such as an application. The application stored in the memory 932 may include one or more modules, each corresponding to a set of instructions. In addition, the processing component 922 is configured to execute instructions to perform any method of the aforementioned method applied to the access device, for example, any method shown in any one of FIGs. 4 to 9.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server^{™}, Mac OS X^{™}, Unix^{™}, Linux^{™}, FreeBSD^{™}, or the like.

Those skilled in the art may readily appreciate other implementations of the embodiments of the present disclosure after considering the specification and practicing the contents disclosed herein. The present disclosure is intended to cover any variations, uses, or adaptations of the embodiments of the present disclosure, which follow the general principles of the embodiments of the present disclosure and include common knowledge or customary technical means in the art that are not disclosed in the present disclosure. The specification and the embodiments are to be considered merely as exemplary, and the true scope and spirit of the embodiments of the present disclosure are indicated by the appended claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

## Claims

1. A method for processing an uplink positioning reference signal configuration, performed by a user equipment (UE), and comprising:
releasing or saving an uplink positioning reference signal configuration according to a preset rule, wherein the uplink positioning reference signal configuration is used for uplink positioning when the UE is in an RRC non-connected state.

2. The method according to claim 1, wherein the uplink positioning reference signal configuration comprises a validity area.

3. The method according to claim 1 or 2, wherein releasing or saving the uplink positioning reference signal configuration according to the preset rule comprises at least one of:
when the UE in the RRC non-connected state performs cell reselection and a target cell of the cell reselection is located in the validity area, not releasing the uplink positioning reference signal configuration;
when the UE in the RRC non-connected state performs cell reselection and the target cell of the cell reselection is located outside the validity area, releasing the uplink positioning reference signal configuration;
when the UE in an RRC connected state performs cell handover, releasing the uplink positioning reference signal configuration;
when the UE in the RRC connected state performs cell handover and a target cell of the handover is located in the validity area, not releasing the uplink positioning reference signal configuration;
when the UE in the RRC connected state performs cell handover and the target cell of the handover is located outside the validity area, releasing the uplink positioning reference signal configuration;
when a first message from a first network device is received, not releasing the uplink positioning reference signal configuration, wherein the first message is used to instruct the UE in the RRC non-connected state to enter the RRC connected state.

4. The method according to claim 3, wherein the first message comprises at least one of:
an RRC resume message; and
an RRC setup message.

5. The method according to any one of claims 1 to 4, wherein after saving the uplink positioning reference signal configuration, the method further comprises:
receiving an RRC release message sent by a first network device; and
according to indication information comprised in the RRC release message, continuing to use the saved uplink positioning reference signal configuration.

6. The method according to any one of claims 1 to 4, wherein the method further comprises:
determining whether to continue to use the saved uplink positioning reference signal configuration according to whether an RRC release message sent by a first network device is received.

7. The method according to any one of claims 1 to 6, wherein the method further comprises at least one of:
in a case that the UE in the RRC non-connected state performs cell reselection and a target cell of the cell reselection is located in the validity area, and the uplink positioning reference signal configuration is saved or not released, pausing or stopping a timer associated with the uplink positioning reference signal configuration;
in a case that the UE in an RRC connected state performs a cell handover and a target cell of the handover is located in the validity area, and the uplink positioning reference signal configuration is saved or not released, pausing or stopping the timer associated with the uplink positioning reference signal configuration;
in a case of entering the RRC connected state from the RRC non-connected state according to a received first message sent by a first network device, and saving or not releasing the uplink positioning reference signal configuration, pausing or stopping the timer associated with the uplink positioning reference signal configuration; wherein the first message is used to instruct the UE in the RRC non-connected state to enter the RRC connected state.

8. The method according to claim 5 or 6, wherein after saving the uplink positioning reference signal configuration according to the preset rule, the method further comprises:
determining whether to continue to use the uplink positioning reference signal configuration according to the received RRC release message sent by the first network device; and
in response to determining to use the uplink positioning reference signal configuration, starting a timer associated with the uplink positioning reference signal configuration at a moment when determining to continue to use the uplink positioning reference signal configuration;
wherein the timer is used to time an effective duration of the uplink positioning reference signal configuration.

9. The method according to claim 5, wherein the indication information comprises:
first indication information used to instruct the UE to continue to use the uplink positioning reference signal configuration.

10. The method according to claim 9, wherein the method further comprises:
after receiving the RRC release message comprising the first indication information, an RRC layer of the UE instructing a medium access control (MAC) layer of the UE to start a timer.

11. The method according to claim 5, wherein the indication information comprises:
second indication information used to instruct the UE to continue to use the uplink positioning reference signal configuration; and
third indication information used to instruct to start a timer associated with the uplink positioning reference signal configuration, wherein the timer is used to time an effective duration of the uplink positioning reference signal configuration.

12. A method for processing an uplink positioning reference signal configuration, performed by a first network device of a first cell, and comprising:
sending a radio resource control (RRC) release message, wherein the RRC release message is used to enable a UE to continue to use a saved uplink positioning reference signal configuration.

13. The method according to claim 12, wherein the RRC release message comprises:
first indication information used to instruct the UE to use the uplink positioning reference signal configuration.

14. The method according to claim 12, wherein the RRC release message comprises:
second indication information used to instruct the UE to continue to use the uplink positioning reference signal configuration; and
third indication information used to instruct to start a timer associated with the uplink positioning reference signal configuration, wherein the timer is used to time an effective duration of the uplink positioning reference signal configuration.

15. The method according to any one of claims 12 to 14, wherein the method further comprises:
in a case that the UE in an RRC connected state switches from the first cell to a second cell and the UE saves an uplink positioning reference signal for an RRC non-connected state, sending fourth indication information to a second network device, wherein the fourth indication information indicates that the UE saves the uplink positioning reference signal configuration for the RRC non-connected state.

16. The method according to claim 15, wherein the fourth indication information is comprised in a cell handover message.

17. A method for processing an uplink positioning reference signal configuration, performed by a second network device of a second cell, and comprising:
receiving fourth indication information sent by a first network device of a first cell; wherein the fourth indication information is used to indicate that a UE in an RRC connected state switched from the first cell to the second cell saves an uplink positioning reference signal configuration for an RRC non-connected state.

18. The method according to claim 17, wherein the fourth indication information is comprised in a cell handover message.

19. A method for processing an uplink positioning reference signal configuration, performed by a wireless communication system, the wireless communication system comprising a user equipment (UE), and the method comprising:
the UE releasing or saving an uplink positioning reference signal configuration according to a preset rule, wherein the uplink positioning reference signal configuration is used for uplink positioning when the UE is in an RRC non-connected state.

20. The method according to claim 19, wherein the wireless communication system further comprises a first network device, and the method further comprises:
the first network device sending an RRC resume message or an RRC setup message; and
the UE receiving the RRC resume message or the RRC setup message, and saving the uplink positioning reference signal configuration.

21. The method according to claim 19, wherein the wireless communication system further comprises a first network device, and the method further comprises:
the first network device sending an RRC release message; and
the UE receiving the RRC release message, and continuing to use the saved uplink positioning reference signal configuration.

22. The method according to claim 20 or 21, wherein the wireless communication system further comprises a second network device, and the method further comprises:
in a case that the UE in an RRC connected state switches from a first cell to a second cell and the UE saves an uplink positioning reference signal for the RRC non-connected state, the first network device sending fourth indication information to the second network device, wherein the fourth indication information indicates that the UE saves the uplink positioning reference signal configuration for the RRC non-connected state.

23. An apparatus for processing an uplink positioning reference signal configuration, comprising:
a processing module, configured to release or save an uplink positioning reference signal configuration according to a preset rule, wherein the uplink positioning reference signal configuration is used for uplink positioning when a UE is in an RRC non-connected state.

24. An apparatus for processing an uplink positioning reference signal configuration, comprising:
a sending module, configured to send a radio resource control (RRC) release message, wherein the RRC release message is used to enable a UE to continue to use a saved uplink positioning reference signal configuration.

25. An apparatus for processing an uplink positioning reference signal configuration, comprising:
a receiving module, configured to receive fourth indication information sent by a first network device of a first cell; wherein the fourth indication information is used to indicate that a UE in an RRC connected state switched from a first cell to a second cell saves an uplink positioning reference signal configuration for an RRC non-connected state.

26. A communication device, comprising a processor, a transceiver, a memory, and an executable program stored in the memory and capable of being executed by the processor, wherein when running the executable program, the processor executes the method for processing an uplink positioning reference signal configuration according to any one of claims 1 to 11, any one of claims 12 to 16, claim 17 or 18, or any one of claims 19 to 22.

27. A computer storage medium storing an executable program; wherein after the executable program is executed by a processor, the method for processing an uplink positioning reference signal configuration according to any one of claims 1 to 11, any one of claims 12 to 16, claim 17 or 18, or any one of claims 19 to 22 can be implemented.
